Europäisches Patentamt

European Patent Office

Office européen des brevets

(11) Veröffentlichungsnummer: **0 230 249**
**A2**

(12) **EUROPÄISCHE PATENTANMELDUNG**

(21) Anmeldenummer: **87100309.1**

(51) Int. Cl.4: **B01D 3/14**

(22) Anmeldetag: **13.01.87**

(30) Priorität: **16.01.86 DE 3601120**
**12.06.86 DE 3619707**
**20.10.86 DE 3635594**

(43) Veröffentlichungstag der Anmeldung:
**29.07.87 Patentblatt 87/31**

(84) Benannte Vertragsstaaten:
**AT BE CH DE ES FR GB GR IT LI LU NL SE**

(71) Anmelder: **Vinz, Peter, Dr.-Ing.**
**Paosostrasse 24a**
**D-8000 München 60(DE)**

(72) Erfinder: **Vinz, Peter, Dr.-Ing.**
**Paosostrasse 24a**
**D-8000 München 60(DE)**

(74) Vertreter: **Dickel, Klaus, Dipl.-Ing.**
**Julius-Kreis-Strasse 33**
**D-8000 München 60(DE)**

(54) **Energiesparschaltung für kontinuierlich betriebene Destillationsanlagen.**

(57) Die Erfindung betrifft eine Energiesparschaltung für Rektifiziereinrichtungen in kontinuierlich betriebenen Destillationsanlagen und verschiedene Ausführungsformen dieser Schaltung. Neben der gesamten Abwärme des abgereicherten Lösungsstroms kann mit dieser Schaltung über einen weiten Trennbereich auch die gesamte Dephlegmationswärme für die Vorwärmung der angereicherten Ausgangslösung genutzt werden.

Möglich wird dieser Wärmerückgewinn mit einem Gleichstromdephlegmator, der dampfseitig parallel zum Auftriebsteil der Rektifikationssäule geschaltet ist und vorzugsweise mit einem Teilmengenstrom kalter angereicherter Ausgangslösung gekühlt wird. Aus einem Teilmengenstrom des am Beginn des Abtriebsteils der Rektifikationssäule vorliegenden Dampfgemisches werden auf diese Weise gleichzeitig Produktdampf in den geforderten Reinheit und Kondensat für den Rückfluß des dampfseitig entlasteten Auftriebsteils der Säule gewonnen.

Fig. 3

## Energiesparschaltung für kontinuierlich betriebene Destillationsanlagen

Die Erfindung betrifft eine Energiespar-schaltung für kontinuierlich betriebene Destillation-sanlagen, bestehend aus einer Rektifiziersäule mit Abtriebs-und Auftriebsteil, einem Austreiber, der ggf. mit dem Abtriebsteil kombiniert ist, einem Dephlegmator und einem Temperaturwechsler, der einerseits von der angereicherten Ausgangslösung, andererseits von der im Austreiber abgereicherten Lösung durchströmt wird, wobei die angereicherte Ausgangslösung zwischen Ab-und Auftriebsteil der Rektifiziereinrichtung zugeführt wird.

Rektifiziereinrichtungen werden in derartigen Destillationsanlagen erforderlich, wenn das zu trennende Flüssigkeitsgemisch als Lösungsmittel eine Flüssigkeitskomponente enthält, deren Dampfdruck gegenüber dem des leichter siedenden Produkts nicht vernachlässigbar ist und wenn darüber hinaus die Stofftrennung weitestgehend vollständig und das geforderte Produkt in beliebiger Reinheit und in endlichen Mengen im kontinuierlichen Prozeß gewonnen werden soll. Rektifiziereinrichtungen ersetzen in diesem Fall die konzentrationsgestufte Mehrfachdestillation. Sie reduzieren damit den apparativen Anlagenaufwand und den Energiebedarf für die Stofftrennung. Trotzdem können für ex-treme Produktreinheiten der energetische Trennaufwand und auch der apparative Aufwand erhe-blich werden, insbesondere wenn Flüssigkeitsgemi-sche mit geringsten Produktkonzentrationen ge-trennt werden sollen oder wenn die Partial-dampfdrücke der zutrennenden Gemi-schbestandteile annähernd gleich werden.

Rektifiziereinrichtungen mit diesen Stofftrenneigenschaften bestehen im allgemeinen aus einer gekoppelten Rektifikationssäule mit einem Abtriebsteil und einem Auftriebsteil und einem dem Kondensator vorgeschalteten Rückflußkühler - (Dephlegmator). Diese Apparate sind dem beheizten Austreiber in der genannten Reihenfolge nachgeschaltet. Diese Schaltung ist in der Destillationstechnik weit verbreitet und wird in der Literatur ausführlich behandelt.

Der Gedanke, mit einer verbesserten Rektifizie-reinrichtung den Trennaufwand unter Ausnutzung des Kühlpotentials des kalten Über-schußmengenstroms der Ausgangslösung zu redu-zieren, ist nicht neu. Die bekanntgewordenen Versuche hierzu sind jedoch letztlich gescheitert, weil wichtige physikalische Gesetzmäßigkeiten des Stofftrennprozesses nicht eingehalten wurden.

So wird in einem Vortrag auf der Kältetechnischen Tagung im Jahre 1974, in Nürnberg von ein-er Schaltung berichtet, bei der der Überschußmengenstrom vor dem Temperaturwechsler abgetrennt und separat der Rektifizierkolonne auf einem mittleren Boden des Auftriebteils zugeführt wird. Aus DE-OS 2849076 ist ferner eine Rektifiziereinrichtung bekannt, bei der der separierte Überschußmengenstrom am Kopf des Auftriebteils in die Kolonne eingeführt und in einer medientrennenden Leitung innerhalb der Kolonne nach unten, bis an die Eintrittstelle des im Temperaturwechsler erwärmten Hauptlösungsstroms geführt wird, wobei sich der Überschußmengenstrom bis auf die Temperatur des Hauptlösungsstroms aufheizen soll.

Im ersten Fall besteht der Mangel, daß in der Auftriebskolonne zwei Lösungsströme mit verschiedenartigen Rektifikationspotentialen -der Dephlegmatorrücklauf mit dem kalten Überschußmengenstrom der angereicherten Lösung - mischen. Beide Lösungsströme haben am Mischungsort, d.h. vor ihrer Mischung unter-schiedliche Konzentrationen und auch unter-schiedliche Temperaturen. Der Mischungsvorgang selbst verläuft exotherm mit einer Konzentrationsabnahme und einer Temperaturzunahme im zusammengeführten Lösungsstrom. Dabei werden die in den getrennt vorliegenden Lösungsströmen vorhandenen Rektifikationspotentiale neutralisiert.

Mit dieser Schaltung ist nur unter einer Bedingung eine wirksame Nutzung des Kühlpotentials des kalten Überschußlösungsstroms für die Aufkonzentrierung des Dampfgemisches möglich. Hierfür muß jedoch der Teillösungsstrom am Kopf des Auftriebteils der Rektifiziersäule zugeführt werden und außerdem das Kühlpotential für die geforderte Aufkonzentrierung des Dampfpotentials ausreichend bemessen sein.

In den häufigsten Trennprozessen kann jedoch das Dampfgemisch nur vorrektifiziert und anschließend in einem nachgeschalteten Auftrieb teil mittels energieverlustbehaftetem Kondensatrückfluß weiter aufkonzentriert werden.

Im zweiten Fall erwärmt sich dieser Überschußmengenstrom der Ausgangslösung in der Kolonne, ohne einen Rektfizierbeitrag zu leisten, so daß seine aufgenommene Wärmemenge zusätzlich dem Austreiber zugeführt werden muß. Einen Rek-tifikationsbeitrag könnte der kalte Über-schußmengenstrom der Ausgangslösung in diesem Fall nur leisten, wenn sichergestellt wird, daß er entweder nur den in gleicher Richtung abwärts strömenden Dephlegmatorrücklauf unterkühlt oder aber nur gegenläufigen Kältemitteldampf auskondensiert, wobei im letztgenannten Fall der gereinigte Kältemitteldampf nicht mehr in Kontakt mit dem Lösungsrücklauf kommen darf. Ein Mischbetrieb, d.h. die Kühlung sowohl des Lösungsrücklaufs wie auch des Kältemitteldampfes bleibt dagegen wirkungslos.

Aufgabe der Erfindung ist es, für die Rektifiziereinrichtungen von kontinuierlich arbeitenden Destillationsanlagen eine energiesparende Schaltung zu schaffen, mit der neben der gesamten Abwärme der im Austreiber abgereicherten Lösung möglichst auch die gesamte Dephlegmationsabwärme für die Vorwärmung der angereicherten Ausgangslösung nutzbar wird.

Gelöst wird diese Aufgabe gemäß der Erfindung durch die in den Patentansprüchen angegebenen Merkmale, in dem gemäß dem Hauptanspruch ein Dephlegmator (3b) dampfseitig parallel zum Auftriebsteil (2b) der Rektifiziersäule geschaltet ist und mit Dampf aus der Übergangszone zwischen Ab-und Auftriebsteil (2a und 2b) versorgt wird, der durch Auskondensieren der schwerer siedenden Komponente bis zur geforderten Produktreinheit aufkonzentriert und mit dem Kopfprodukt des Auftriebsteils (2b) vereinigt dem Kondensator - (5) zugeführt wird, während das im Dephlegmator - (3b) gebildete Kondensat als Rückfluß am Kopf des Auftriebsteils (2b) eingespeist wird.

Gemäß Anspruch 2 der Erfindung ist es eine besonders vorteilhafte Ausführung dieser Schaltung, wenn der aus der Übergangszone zwischen dem Ab-und Auftriebsteil (2a und 2b) abgezweigte Dampf vor seinem Eintritt in den Dephlegmator - (3b) einen eigenen Auftriebsteil (2c)·durchströmt, und wenn der Dampf, gemäß Anspruch 3 der Erfindung anschließend am Kopf des Dephlegmators - (3b) zugeführt und im Gleichstrom mit der auskondensierenden Komponente nach unten strömt, während das Dephlegmatorkühlmittel dazu im Gegenstrom nach oben strömt.

Seine volle Wirkung entfaltet die Energiesparschaltung, wenn gemäß Anspruch 4 der Erfindung der Dephlegmator (3b) mit dem Überschußlösungsstrom ($1' \bullet \xi \stackrel{\scriptscriptstyle{,}}{r}$) der kalten angereicherten Ausgangslösung gekühlt wird und wenn der Restlösungsstrom ($(f-1)' \bullet \xi r'$) der kalten Ausgangslösung im Temperaturwechsler (4) vollständig die Abwärme des mengengleich aus dem Austreiber (1) abgezogenen abgereicherten Lösungsstroms ($(f-1)' \bullet \xi \stackrel{\scriptscriptstyle{,}}{a}$) aufnimmt.

Gemäß Anspruch 5 der Erfindung ist es besonders vorteilhaft, wenn der Überschußteilstrom ($1' \bullet \xi \stackrel{\scriptscriptstyle{,}}{r}$) der Ausgangslösung nach seiner Aufheizung im Dephlegmator (3b) am Kopf des Auftriebsteils - (2c) als Rückfluß eingespeist wird und wenn der Lösungsabfluß des Auftriebsteils (2c) und der im Temperaturwechsler (4) aufgeheizte Restlösungsstrom ($(f-1)' \bullet \xi r'$) gemeinsam am Beginn des Abtriebsteils (2a) in die Rektifiziereinrichtung eingespeist werden.

Darüber hinaus kann es gemäß Anspruch.6 der Erfindung von Vorteil sein, wenn dem Auftriebsteil - (2c) als Kopfeinspeisung der Lösungsabfluß des Auftriebsteils (2b) zugeführt wird und wenn der im Dephlegmator (3b) aufgeheizte Teillösungsstrom ($1' \bullet \xi \stackrel{\scriptscriptstyle{,}}{r}$) der Ausgangslösung gemeinsam mit der im Temperaturwechsler (4) aufgeheizten Restlösungsstrom der Ausgangslösung am Beginn des Abtriebteils (2a) der Rektifiziereinrichtung zugeführt wird.

Während bei offenen Destillationsprozessen der Dephlegmatorkühlmittelstrom die Konzentration der angereicherten Ausgangslösung aufweist, kann dieser bei im Kreislauf geführten Destillationsprozessen auch eine höhere Konzentration annehmen. Die Frage, welcher der Lösungsströme die geeignetste Kopfeinspeisung für den Auftriebsteil (2c) darstellt, -der Dephlegmatorkühlmittelstrom oder der Lösungsabfluß des Auftriebsteils (2b) ist jeweils abhängig vom zutrennenden Gemischsystem und von den Konzentrationsvorgaben und läßt sich daher nur rechnerisch und von Fall zu Fall entscheiden.

Für diese mit der Energiesparschaltung mögliche parallelgeschaltete Aufkonzentrierung des Produktdampfes ist jedoch in jedem Last-und Auslegungsfall das gesamte Kühlpotential des Stoffstromes ($1' \bullet \xi \stackrel{\scriptscriptstyle{,}}{r}$) der kalten angereicherten Ausgangslösung verfügbar, da nur ein Stoffstrom ($(f-1)-'\bullet\xi \stackrel{\scriptscriptstyle{,}}{r}$) der kalten Ausgangslösung erforderlich ist, um im Temperaturwechsler (4) die gesamte Abwärme des im Austreiber (1) abgereicherten Stoffstromes ($(f-1)'\bullet\xi \stackrel{\scriptscriptstyle{,}}{a}$) zu übernehmen.

Die im Austreiber (1) abgereicherte Lösung ($(f-1)'\bullet\xi \stackrel{\scriptscriptstyle{,}}{a}$) kann damit im Temperaturwechsler (4) bis auf wenige Grade über der Temperatur der kalten angereicherten Ausgangslösung ($f'\bullet\xi \stackrel{\scriptscriptstyle{,}}{r}$) abgekühlt werden (annähernd gleiches $c_p$ der wärmeaustauschenden Stoffströme vorausgesetzt).

Mit dem Kühlpotential des überschüssigen Stoffstroms ($1'\bullet \xi \stackrel{\scriptscriptstyle{,}}{r}$) der kalten angereicherten Ausgangslösung kann in einem Gleichstromdephlegmator (3b) sowohl ein Anteil Produktdampf wie auch Kondensat für den Kondensatrückflußbedarf des parallelgeschalteten Auftriebsteils (2b) gewonnen werden. D.h., beide Produkte des Gleichstromdephlegmators (3b) entlasten den Auftriebsteil (2b) der Rektifiziersäule und damit auch ihren Abwärmeanteil. In bestimmten Konzentrationsgrenzen ermöglichen die so gewonnenen Produkte des Gleichstromdephlegmators (3b) den abwärmefreien Betrieb des Rektifikatorauftriebteils (2b).

Es gibt nun für die verschiedenartigsten Stofftrennprozesse angepaßte Energiesparschaltungen, die neben dem gesamten, Abwärmepotential des abgereicherten Lösungsstroms ($(f-1)'\bullet \xi \stackrel{\scriptscriptstyle{,}}{a}$)das Kühlpotential des darüber hinaus verfügbaren kalten angereicherten Teilstroms der Ausgangslösung ($1' \bullet \xi \stackrel{\scriptscriptstyle{,}}{r}$) wirkungsvoll für die Rektifikation des Produktdampfes nutzen.

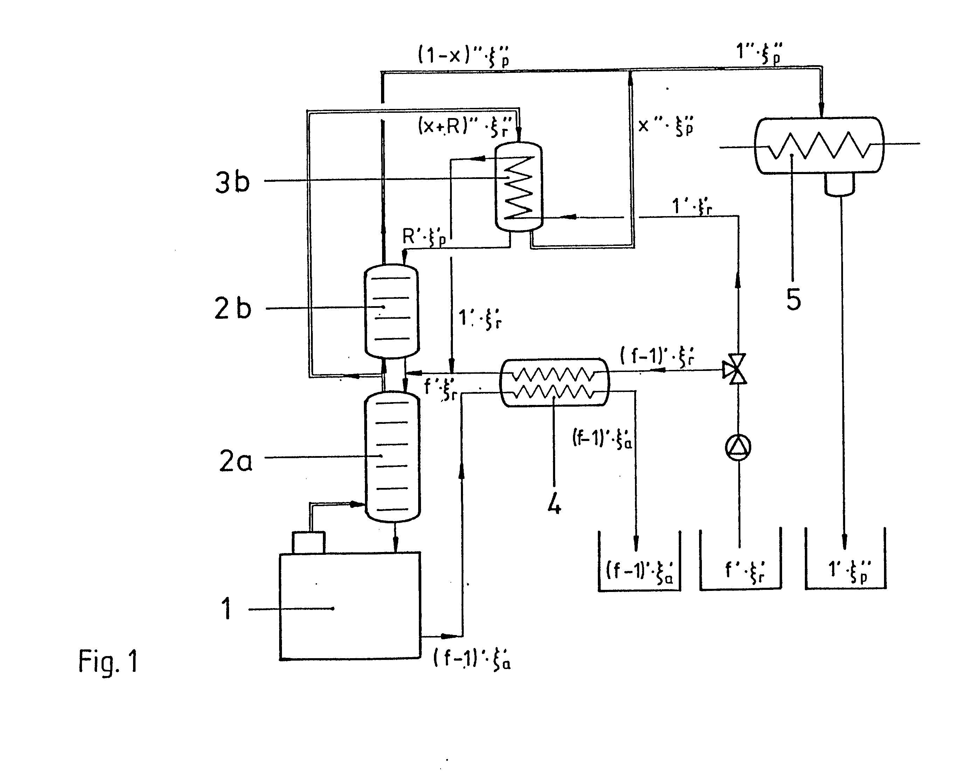

Diese verschiedenen Ausführungsformen der Energiesparschaltung werden anhand der Zeichnungen (Fig.1-Fig.6) näher erläutert.

Fig.1 zeigt die Grundform der Energiesparschaltung. In dieser sind dem Austreiber (1) dampfseitig die Rektifiziereinrichtung (Abtriebsteil 2a und Auftriebsteil 2b), der Dephlegmator (3b) und der Kondensator (5) nachgeschaltet. Der Dephlegmator (3b) ist seinerseits dampfseitig parallel zum Auftriebsteil (2b) der Rektifiziereinrichtung geschaltet und wird mit der Teildampfmenge($(x+R)"•\xi \overset{..}{r}$) aus der Übergangszone zwischen Ab-und Auftriebsteil (2a bzw. 2b) der Rektifiziereinrichtung versorgt.

Der Teilstrom ($(x+R)"\xi \overset{..}{r}$) wird dem Dephlegmator (3b) am Kopf zugeführt und in diesem im Gleichstrom mit der auskondensierenden Komponente ($R'•\xi \overset{.}{p}$) geführt. Die auskondensierte Komponente ($R' • \xi \overset{.}{p}$) wird gesammelt und am Kopf des Auftriebteils (2b) als Rückfluß eingespeist und in diesem im Gegenstrom zum aufwärtsströmenden Teildampfgemisch nach unten geführt. Die Produktdampfströme des Dephlegmators ($x"•\xi \overset{..}{p}$) und des Auftriebteils ($(1-x)"•\xi \overset{.}{p}$) werden vereinigt und gemeinsam dem Kondensator (5) zur Verflüssigung zugeführt. Der abgereicherte Lösungsstrom ($(f-1)'•\xi \overset{.}{a}$) verläßt den Austreiber - (1) am Austreibersumpf und wird im Gegenstrom zum mengengleichen Teilstrom ($(f-1)'•\xi \overset{.}{r}$) der angereicherten Ausgangslösung durch den Temperaturwechsler (4) geführt. Der überschüssige Teilstrom ($1'•\xi \overset{.}{r}$) der angereicherten Ausgangslösung dient als Dephlegmatorkühlmittel und wird innerhalb des Dephlegmators (3b) im Gegenstrom zum auskondensierenden Dampfgemisch ($(x+R)" •\xi \overset{.}{r}$) geführt. Der im Temperaturwechsler (4) aufgeheizte Teilstrom ($(f-1)' • \xi \overset{.}{r}$) und der im Dephlegmator aufgeheizte Überschußstrom ($1' • \xi \overset{.}{r}$) der Ausgangslösung werden schließlich zusammengeführt und am Kopf des Abtriebteils (2a) in die Rektifiziereinrichtung eingespeist.

Die Produktströme ($R'•\xi \overset{.}{p}$) und ($x"•\xi \overset{..}{p}$) des Dephlegmators (3 b)entlasten beide den Auftriebsteil (2b) der Rektifiziereinrichtung. Über einen weiten Trennbereich kann damit die Aufkonzentrierung des Produktdampfes ohne Fremdkühlung ausgeführt werden, und für die Stofftrennung muß nur die Verdampfungswärme des aufkonzentrierten Produkts von außen zugeführt werden.

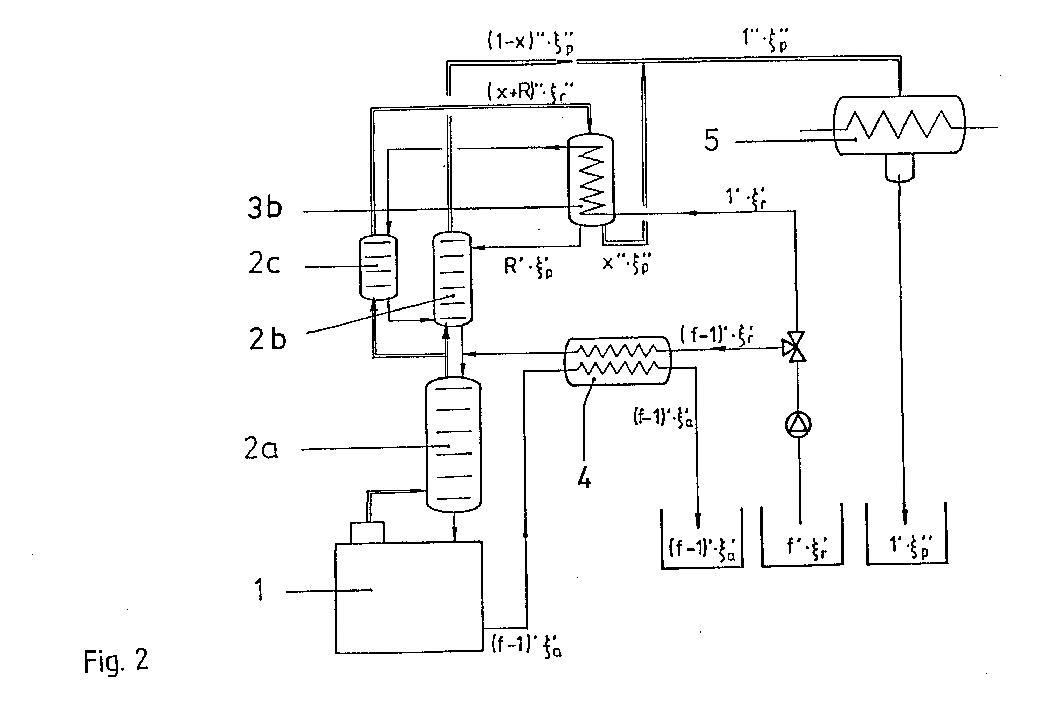

Fig. 2 zeigt eine Energiesparschaltung mit einem zusätzlichen Auftriebsteils (2c). Dieser Auftriebsteil (2c) wird von dem aus der Übergangszone zwischen Ab-und Auftriebsteil (2a bzw. 2b) abgezweigten Dampfgemisch vor seinem Eintritt in den Dephlegmator (3b) durchströmt. Als Rückfluß wird dem Auftriebsteil (2c) der im Dephlegmator (3b) aufgeheizte Überschußmengenstrom ($1' • \xi \overset{.}{r}$) der Ausgangs lösung zugeführt. Der Lösungsablauf des Auftriebteils (2c) wird an einem konzentrationsgleichen Ort der Rektifiziereinrichtung zugeführt. Mit dieser Schaltung kann das in den Dephlegmator einzuspeisende Dampfgemisch vor seinem Eintritt konzentrationsstabilisiert werden.

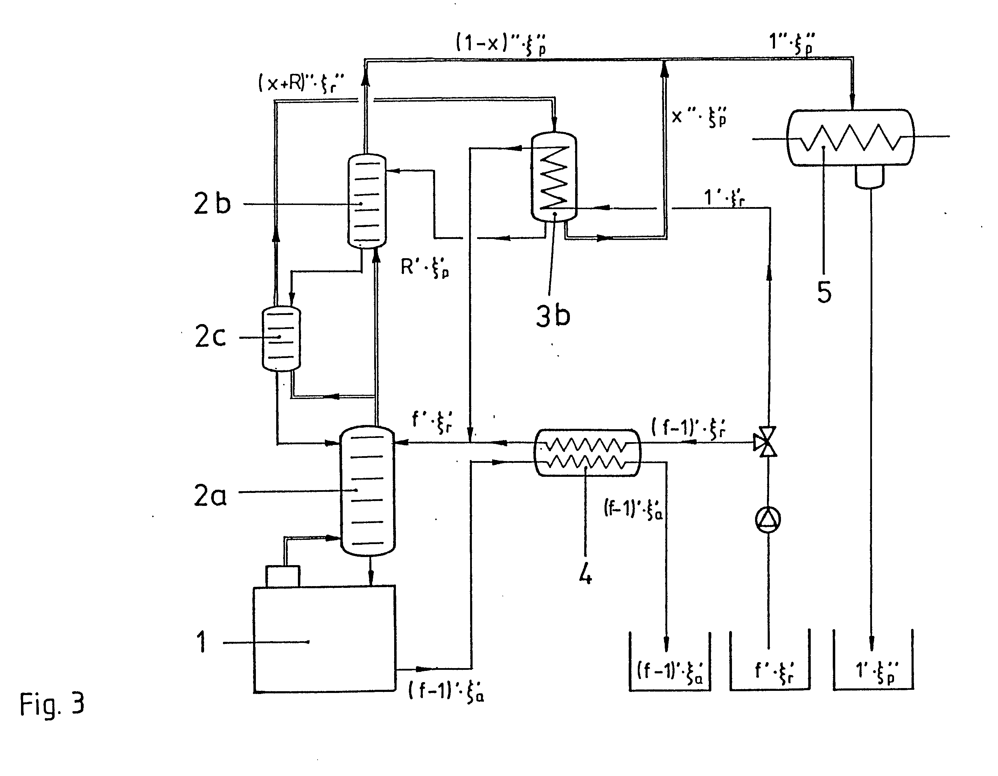

Fig. 3 zeigt den gleichen apparatemäßigen Aufbau wie die Schaltung nach Fig. 2, jedoch wird hier dem Auftriebsteils (2c) der Lösungsablauf (2b) als Rückfluß aufgeschaltet und der im Dephlegmator aufgeheizte Überschußmengenstrom ($1' • \xi \overset{.}{r}$) und der im Temperaturwechsler (4) aufgeheizte Teilmengenstrom ($(f-1)'•\xi \overset{.}{r}$) werden gemeinsam am Kopf des Abtriebteils (2a) in die Rektifiziereinrichtung eingespeist, während der Lösungsablauf des Auftriebteils (2c) an einem konzentrationsgleichen Ort in die Rektifiziereinrichtung eingespeist wird.

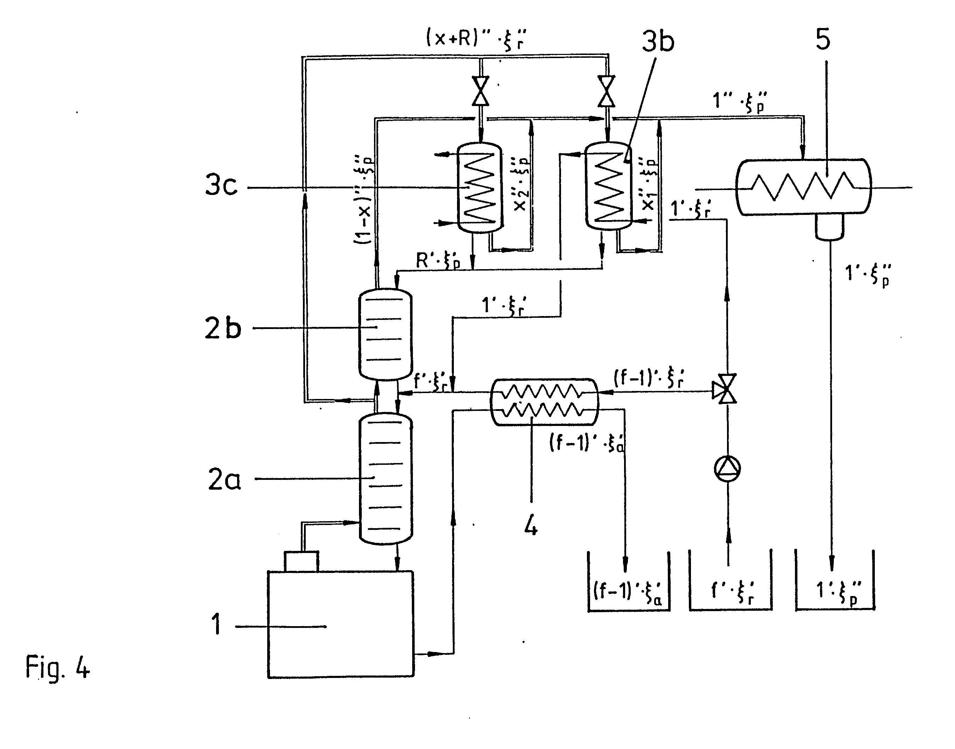

Figur 4 zeigt die Energiesparschaltung für eine Gemischtrennung, bei der das Kühlpotential des überschüssigen Teilstroms der Ausgangslösung ($1 '•\xi \overset{.}{r}$) zwar in der Lage ist die geforderte Produktreinheit einzuhalten, aber nicht ausreicht, um den Kondensatrückflußbedarf des Auftriebteils (2b) mengenmäßig zu decken. In diesem Fall wird neben dem lösungsgekühlten Gleichstromdephlegmator (3b) ein fremdgekühlter Dephlegmator (3c) gleicher Bauart erforderlich. Die Kondensatmengen beider Apparate (3b, 3c) sichern gemeinsam den Kondensatrückflußbedarf des Auftriebteils (2b) und werden am Kopf des Auftriebteils der Rektifikationssäule zugeführt.

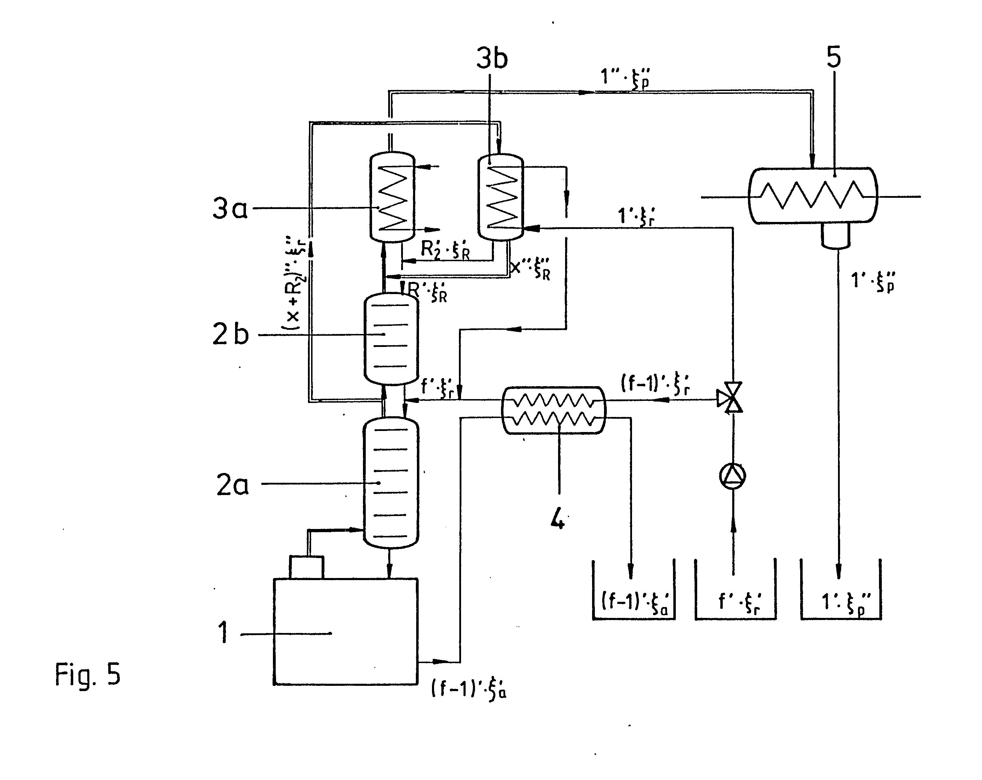

Für den Fall, daß die Kondensatkonzentration am Austritt der Gleichstromdephlegmatoren (3b, 3c) zu gering ist, um die Produktreinheit im Auftriebsteil (2b) zu erreichen, wird den dampfseitig parallel geschalteten Apparaten (3b, 3c) abdampfseitig ein gemeinsamer, fremdgekühlter Gegenstromdephlegmator (3a) nachgeschaltet. Diese Energiesparschaltung zeigt Fig. 5.

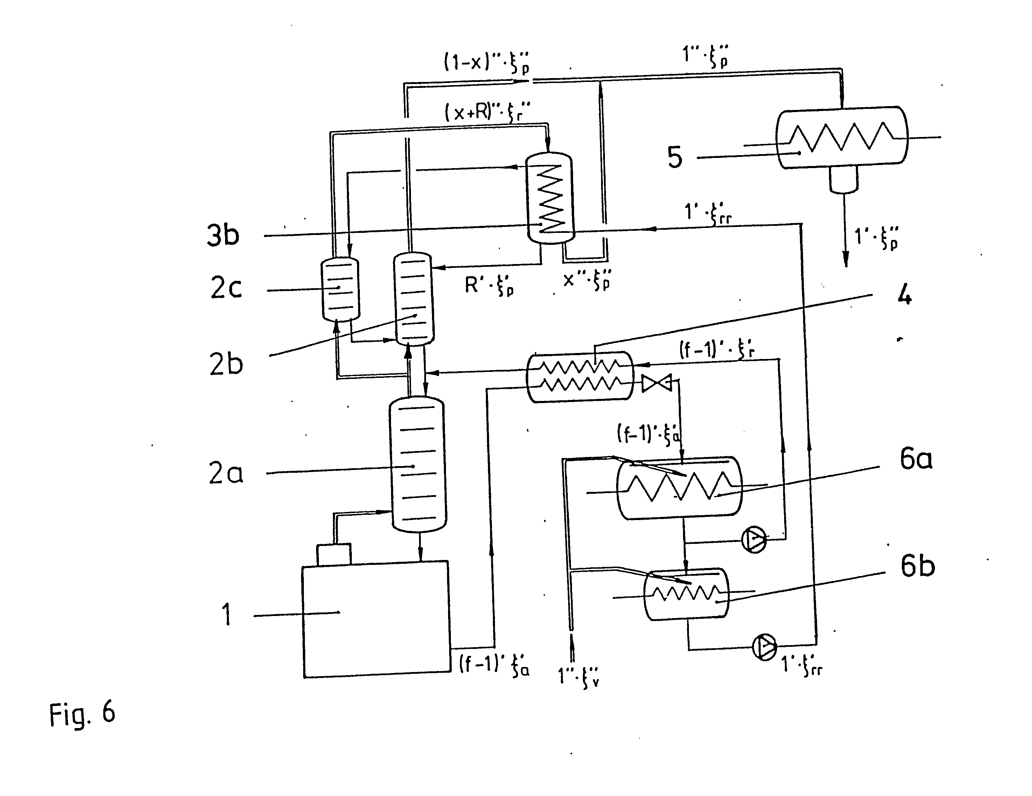

Eine Energiesparschaltung speziell für die Gemischtrennung in geschlossenen Lösungskreisläufen zeigt Figur 6 beispielhaft für den Ammoniak/Wasser-Absorptionskälteprozeß. Der Einsatz dieser Schaltung ist besonders vorteilhaft bei Wärmepumpen und Kälteanlagen mit Heizwärmeauskoppelung.

Die Abwärmeauskoppelung bei höheren Kühlmedientemperaturen bedingt einen Kreislaufbetrieb mit hohem Kondensationsdruck (25-30 bar) und reduzierten Anreicherungsendkonzentrationen im Absorber (0,2 bis 0,25), wodurch die Dephlegmationswärme für die Rektifikation des Dampfgemisches beträchtlich ansteigt.

In diesem Fall kann das Kühlpotential des Dephlegmatorkühlmittelstromes mit einer erweiterten Kaltdampfanreicherung im Absorber (6a, 6b) verlustfrei der erhöhten Abwärmeproduktion in den Rektifiziereinrichtungen angepaßt und somit auf die Zuschaltung eines fremdgekühlten Gleichstromdephlegmators (3c) verzichtet werden.

Die Kaltdampfabsorption findet hier konzentrationsgestuft, in zwei lösungsseitig hintereinandergeschalteten, druckangepaßten Absorptionsapparaten (6a, 6b) statt. Nach der ersten Absorptionsstufe - (6a) wird der teilangereicherte Hauptlösungsstrom - $(f-1'•ξ'_r)$ abgezweigt, im Gegenstrom zum abgereicherten Lösungsstrom (f-1) $'•ξ'_α$ durch den Temperaturwechsler (4) geführt und anschließend am Beginn des Abtriebteils (2a) in die Rektifkationssäule eingespeist. Der überschüssige angereicherte Teillösungsstrom wird dagegen in der zweiten Absorptionsstufe (6b) auf den Betrag (1' • $ξ'_{rr}$) aufkonzentriert, anschließend durch den Dephlegmator (3b) geführt und nach seiner Aufheizung am Kopf des Auftriebteils (2c) in die Rektifiziereinrichtung eingespeist.

Mit dieser konzentrationsgestuften Lösungsanreicherung in den Absorbern kann nicht nur das Kühlpotential des Dephlegmatorkühlmittels auf die Abwärmeproduktion in den Rektifiziereinrichtungen eingestellt werden, sondern zugleich die Austrittstemperatur des Fremdkühlmittels in der Anlage gesteigert werden, ohne den Energieverbrauch der Anlage zu erhöhen.

Bezeichnung der Abbildungen

Fig. 1 Energiesparschaltung in der Grundausstattung

Fig. 2 Energiesparschaltung mit zusätzlichem Auftriebteil (2c) (Kopfeinspeisung des Dephlegmatorkühlmittels)

Fig. 3 Energiesparschaltung mit zusätzlichem Auftriebteil (2c) (Kopfeinspeisung des Lösungsablaufs des Auftriebteil (2b))

Fig. 4 Energiesparschaltung mit fremdgekühlter Paralleldephlegmation

Fig. 5 Energiesparschaltung mit fremdgekühlter Nachdephlegmation

Fig. 6 Energiesparschaltung fü kältetechnische $NH_3$-$H_2O$ Absorptionskreisläufe

Bezeichnungen in den Abbildungen

1 Austreiber
2a Abtriebsteil der Rektifiziereinrichtung
2b Auftriebsteil der Rektifiziereinrichtung
2c Zusatzauftriebsteil der Rektifiziereinrichtung

3a Gegenstromdephlegmator
3b Gleichstromdephlegmator (lösungsgekühlt)
3c Gleichstromdephlegmator (fremdgekühlt)
4 Temperaturwechsler
5 Kondensator
6a Absorberstufe 1
6b Absorberstufe 2

Forsetzung der Bezeichnungen

f Lösungszulauf oder Lösungsumlauf
f-1 Lösungsablauf
1 Produktablauf
R Kondensatrückfluß
X Anteil des Produktablaufs
ξ Konzentration

Indizes

p Produkt
a abgereichert
r angereichert
rr zweifach angereichert
' Flüssigkeit
" Dampf

**Ansprüche**

1. Energiesparschaltung für kontinuierlich betriebene Destillationsanlagen, bestehend aus einer Rektifiziersäule mit Abtriebsund Auftriebsteil, einem Austreiber, der ggf. mit dem Abtriebsteil kombiniert ist, einem Dephlegmator und einem Temperaturwechsler, der einerseits von der angereicherten Ausgangslösung, andererseits von der im Austreiber abgereicherten Lösung durchströmt wird, wobei die angereicherte Ausgangslösung zwischen Abund Auftriebsteil der Rektifiziersäule zugeführt wird,
dadurch gekennzeichnet,
daß der Dephlegmator (3b) dampfseitig parallel zum Auftriebsteil (2b) der Rektifiziersäule geschaltet ist und mit Dampf aus der Übergangszone zwischen Ab-und Auftriebsteil (2a bzw. 2b) versorgt wird, der durch Auskondensieren seiner schwerer siedenden Komponente bis zur geforderten Produktreinheit aufkonzentriert und mit dem Kopfprodukt des Auftriebsteils (2b) vereinigt wird, während das im Dephlegmator (3b) gebildete Kondensat als Rückfluß am Kopf des Auftriebsteils (2b) eingespeist wird.

2. Energiesparschaltung nach Anspruch 1, dadurch gekennzeichnet, daß der aus der Übergangszone zwischen dem Ab-und Auftriebsteil (2a bzw. 2b) der Rektifiziereinrichtung abgezweigte Dampf vor dem Eintritt in den Dephlegmator (3b) einen eigenen Auftriebsteil (2c) durchströmt.

3. Energiesparschaltung nach den Ansprüchen 1 und 2, dadurch gekennzeichnet, daß der Dampf am Kopf des Dephlegmators (3b) zugeführt und im Gleichstrom mit der auskondensierenden Komponente nach unten strömt, während das Kühlmittel dazu im Gegenstrom nach oben strömt.

4. Energiesparschaltung nach den Ansprüchen 1, 2 und 3, dadurch gekennzeichnet, daß der Dephlegmator (3b) mit dem von der kalten Ausgangslösung abgezweigten Teilstrom ($1' \cdot \xi_r'$) gekühlt wird und der Restlösungsstrom der kalten Ausgangslösung (($f-1$)$' \cdot \xi_r'$) im Gegenstrom zum mengengleichen, im Austreiber (1) abgereicherten Lösungsstrom (($f-1$)$' \cdot \xi_a'$) durch den Temperaturwechsler (4) geführt wird.

5. Energiesparschaltung nach den Ansprüchen (1-4) dadurch gekennzeichnet, daß das Dephlegmatorkühlmittel nach seiner Aufheizung am Kopf des Auftriebteils (2c) als Rückfluß eingespeist wird, und daß der Lösungsabfluß des Auftriebteils (2c) und der im Temperaturwechsler (4) aufgeheizte Restlösungsstrom (($f-1$)$' \cdot \xi_r'$) gemeinsam am Beginn des Abtriebteils (2a) in die Rektifiziereinrichtung eingespeist werden (Fig.2).

6. Energiesparschaltung nach den Ansprüchen (1-h4) dadurch gekennzeichnet, daß dem Auftriebsteil (2c) als Kopfeinspeisung der Lösungsabfluß des Auftriebteils (2b) zugeführt wird und der im Dephlegmator (3b) aufgeheizte Teilmengenstrom ($1' \cdot \xi_r'$) der Ausgangslösung gemeinsam mit dem im Temperaturwechsler aufgeheizten Restlösungsstrom (($f-1$)$' \cdot \xi_r'$) der Ausgangslösung am Beginn des Abtriebteils (2a) in die Rektifiziereinrichtung eigespeist wird (Fig.3)

7. Energiesparschaltung nach einem der vorhergehenden Ansprüche, dadurch gekennzeichnet, daß zu dem Dephlegmator (3b) ein weiterer Dephlegmator (3c) parallelgeschaltet ist, daß dieser parallelgeschaltete Dephlegmator (3c) jedoch fremdgekühlt ist. (Fig. 4).

8. Energiesparschaltung nach einem der Ansprüche 1 bis 6, wobei das Kopfprodukt der Rektifiziersäule einem Dephlegmator (3a) zugeführt wird, dadurch gekennzeichnet, daß dem Kopfprodukt vor seinem Eintritt in den Dephlegmator (3a) der aufkonzentrierte Dampf aus dem weiteren Dephlegmator (3b) zur weiteren Aufkonzentration zugeführt wird und daß die auskonsierenden Komponenten beider Dephlegmatoren (3a, 3b) als Rückfluß am Kopf des Auftiebsteils (2b) eingespeist werden. (Fig.5)

9. Energiesparschaltung nach einem der Ansprüche 1 bis 6 zur Anwendung bei Kältemaschinen nach dem Absorptionsprinzip im geschlossenen Kreislauf, wobei das Produkt einen Kondensator und einen Kältemittelverdampfer durchströmt und der Produkt-Kaltdampf sodann in einem Absorber von der abgereicherten Lösung absorbiert und die entstehende angereicherte Lösung wieder zwischen Ab- und Auftriebssäule - (2a, 2b) zugeführt wird, dadurch gekennzeichnet, daß zwei Absorber (6a und 6b) dampfseitig parallel, lösungsseitig jedoch hintereinandergeschaltet sind und daß die Lösung aus dem zweiten Absorber - (6b) als Kühlmittel für den Dephlegmator (3b) dient und nach ihrer Aufheizung in den Auftriebsteil (2b) der Rektifiziersäule eingespeist wird. (Fig. 6)

Fig. 1

Fig. 2

$(1-x)'' \cdot \xi_p''$

$1''' \cdot \xi_p''$

$(x+R)'' \cdot \xi_r''$

5

3b

2c

$1' \cdot \xi_r'$

$R' \cdot \xi_p'$

$x'' \cdot \xi_p''$

2b

$(f-1)' \cdot \xi_r'$

2a

$(f-1)' \cdot \xi_a'$

4

$(f-1)' \cdot \xi_a'$

$f' \cdot \xi_r'$

$1' \cdot \xi_p''$

1

$(f-1)' \cdot \xi_a'$

0 230 249

Fig. 3

Fig. 4

Fig. 5

$1''' \cdot \xi_p''$

3b

5

3a

$(x + R_2)'' \cdot \xi_r''$

$R_2' \cdot \xi_R'$

$1' \cdot \xi_r'$

$x'' \cdot \xi_R''$

$R' \cdot \xi_R'$

2b

$f' \cdot \xi_r'$

$(f-1)' \cdot \xi_r'$

$1' \cdot \xi_p''$

4

2a

1

$(f-1)' \cdot \xi_a'$

$(f-1)' \cdot \xi_a'$

$f' \cdot \xi_r'$

$1' \cdot \xi_p''$

0 230 249

Fig. 6